# EUROPEAN PATENT APPLICATION

(11) **EP 4 796 707 A1**
(43) Date of publication of application: **26.08.2026**
(21) Application number: 26159965.8
(22) Date of filing: 21.02.2026
(51) Int. Cl.: E01C 19/08, E01C 23/06, B65D 88/74

(54) **MOBILE UNIT WITH TEMPERATURE CONTROL FOR THE TRANSPORT AND APPLICATION OF ASPHALT IN PAVEMENT REPAIR**

(30) Priority: 21.02.2025 ES 202530290 U
(71) Applicant: Martínez Cano, José Ángel, 30160 La Cueva de Monteagudo Murcia (ES)
(72) Inventor: Martínez Cano, José Ángel, 30160 La Cueva de Monteagudo Murcia (ES)
(74) Representative: Sahuquillo Huerta, Jesús

(57) **Abstract**

A mobile unit with a thermal stabilisation and temperature control system for the transport and application of asphalt, characterised in that it comprises a thermally insulated storage hopper (1) mounted on a mobile chassis (5), designed to contain hot asphalt and prevent it from losing heat, said hopper (1) being equipped with a heating system (2) comprising electrical heating elements distributed throughout its interior.

## Description

### Technical field

The technical field of the invention falls within civil engineering and road construction technology, specifically in the area of the transport, storage and application of hot asphalt. It relates to pavement maintenance and repair technologies, as well as to thermal stabilisation systems for bituminous materials.

### State of the art

The current state of the art is based on the use of thermal containers for the transport of hot asphalt. These devices allow the asphalt to be loaded, and its temperature maintained for a limited time, but they do not prevent progressive heat loss. Once loaded, the asphalt begins to cool from the very start and, although some systems include mechanisms to slow down heat loss, such as thermal insulation and motors to facilitate extraction, they fail to maintain a constant temperature above 130 °C for long periods. This limitation means that the transported asphalt can become unsuitable for on-site application within a few hours, failing to comply with current regulations, which require temperatures above 130 °C to guarantee the quality and durability of the material.

The main problem lies in the loss of temperature of the asphalt during transport and storage in mobile units. This drop in temperature prevents its correct application in road repairs, as the material loses its mechanical properties and degrades within a short time. This results in the waste of polluting material, as the bitumen ends up in landfills rather than being recycled, thereby contaminating the subsoil, since there are no plants that recycle asphalt; it also leads to rework and higher operating costs, as well as compromising the quality of repairs.

The invention refers to standard PG-3, which is the General Technical Specifications for Road and Bridge Works in Spain. This document sets out the technical requirements for the construction and maintenance of road infrastructure, including specifications regarding the minimum temperature at which asphalt must be applied.

In particular, it states that asphalt must not be applied below 130 °C, as if the temperature falls below this threshold, the material loses its mechanical and adhesive properties, which can lead to its premature degradation within a few days or weeks. The invention aims to ensure that the asphalt transported and applied maintains a constant temperature within the values required by this standard, thereby preventing degradation (quality) issues in road repairs.

The invention solves this problem by means of a mobile unit with a thermal stabilisation system that allows the asphalt to be maintained at a constant temperature of approximately 140 °C for prolonged periods. The solution incorporates an electrically powered hopper with software-controlled heating elements, which regulates the temperature within a programmable range. This ensures that the asphalt retains its optimal application properties without significant heat loss, allowing for its efficient use in repairing small patches of road surface, even when these are spread across different locations and require long travel times between interventions.

### Description of the invention

The object of the invention is to provide a mobile unit with a thermal stabilisation system designed to transport and maintain asphalt at a constant temperature for long periods, ensuring its correct application in road repairs. This unit incorporates a hopper equipped with heating elements controlled by an electronic system that can be programmed both on the unit itself and remotely, allowing the temperature of the material to be regulated and stabilised within an optimal range. Thanks to this system, the asphalt is maintained above 130 °C, preventing premature degradation and complying with regulatory requirements for its application. This objective is achieved by the mobile unit described in the claims accompanying this specification.

More specifically, the invention focuses on thermal stabilisation technology, which involves the development of a mobile system that maintains the temperature of the asphalt during its transport and application, ensuring that it does not fall below 130°C, which is the minimum temperature required by the PG3 standard to guarantee the properties of the asphalt.

In other words, the invention involves the design of a mobile unit (hopper) with a temperature control system that uses electric heating elements and software to maintain the asphalt at a constant temperature (around 140°C) for extended periods, including several days. Another object of the present invention is the software-controlled automated temperature control system, which allows the temperature of the asphalt to be adjusted and maintained within a specific range (135°C - 145°C), which is crucial for the quality of the material during its application.

Finally, the invention is specifically designed to facilitate the repair of potholes in streets and roads, where asphalt patches of varying sizes are required, whilst maintaining the appropriate temperature during transport and application.

This invention offers several advantages over the current state of the art. Firstly, it allows the asphalt to be maintained at a stable temperature without significant heat loss, preventing the material from cooling and losing its mechanical properties. Unlike conventional thermal containers, which merely slow down heat loss but do not guarantee constant temperature maintenance, this mobile unit achieves precise regulation via software-controlled electric heating elements and allows for remote monitoring and control if necessary.

Another key advantage is its ability to transport hot asphalt over extended periods, enabling its use for pothole repairs and patching at different locations without the material becoming unusable. This optimises resources, reduces asphalt waste, prevents pollution from surplus bituminous waste in landfills and improves operational efficiency, as multiple repairs can be conducted without the need to return to the production plant to reload material. Furthermore, by ensuring that the asphalt is applied at the correct temperature, the adhesion and durability of the repairs are improved, preventing premature failure of the road surface.

Throughout the description and claims, the word 'comprises' and its variants are not intended to exclude other technical features, additives, components or steps. To those skilled in the art, other objects, advantages and features of the invention will be apparent partly from the description and partly from the practice of the invention. The following examples and drawings are provided by way of illustration and are not intended to restrict the present invention. Furthermore, the present invention covers all possible combinations of the particular and preferred embodiments indicated herein.

### Brief description of the drawings

A very brief description is now given of a series of drawings which aid in a better understanding of the invention, and which relate specifically to an embodiment of said invention presented as a nonlimiting example thereof.

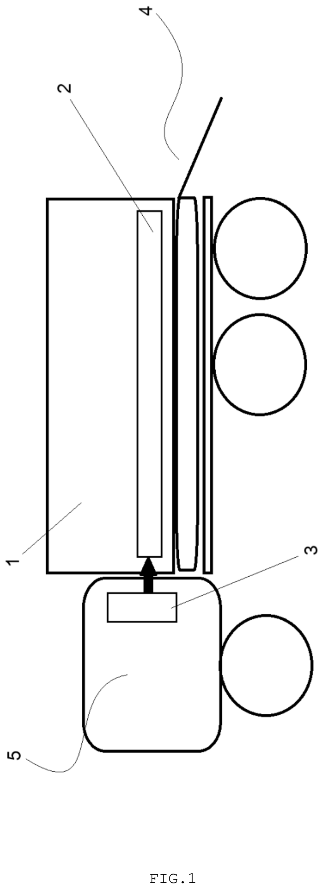

FIG. 1 shows a schematic diagram of the mobile unit of the invention mounted on a lorry.

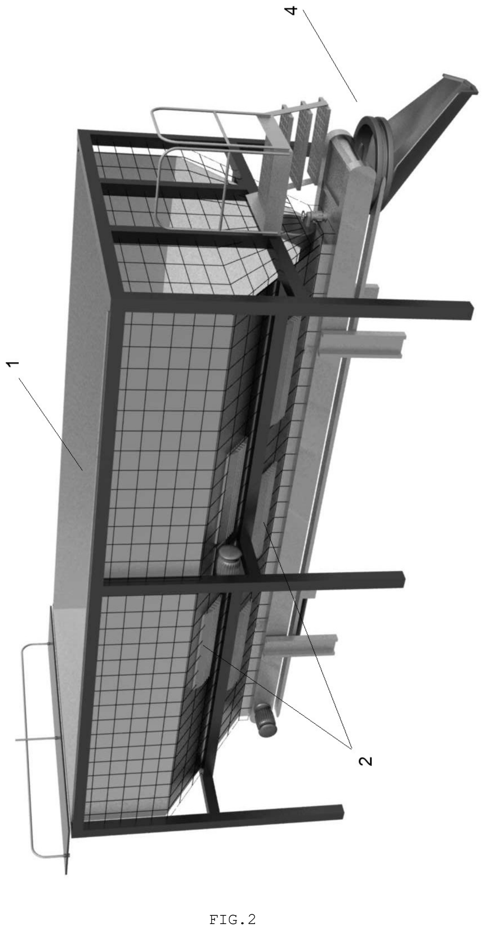

FIG. 2 shows the mobile unit of the invention outside the mobile chassis.

The following references have been used in the figures:
Storage hopper (1): A thermally insulated container in which hot asphalt is stored.
Heating system (2): Set of electric heating elements responsible for maintaining the temperature of the asphalt within an optimal range.
Electronic controller (3): Device that regulates the switching on and off of the heating elements according to the temperature of the asphalt.
Material extraction system (4): Mechanism that allows the controlled discharge of asphalt from the hopper, which may be a conveyor belt or a screw conveyor.
Mobile chassis (5): Structure on which the hopper and other components are mounted, allowing the unit to be transported to different locations.

### Detailed description of one embodiment of the invention

The invention relates to a mobile unit with a thermal stabilisation system designed to transport and maintain asphalt at a constant temperature, enabling its correct application in road repairs. To this end, the mobile unit comprises several key components that work together to ensure the thermal preservation of the material and its correct distribution at the application site.

The main component of the invention is the storage hopper (1), which is designed to contain the hot asphalt and prevent temperature loss. This hopper is thermally insulated to minimise heat dissipation and ensure that the material retains its adhesive and mechanical properties. Its structure allows for the storage of a sufficient quantity of asphalt to conduct several repairs without the need for immediate refilling. Furthermore, inside the hopper there is a tube containing a liquid that homogenously stabilises the temperature throughout the asphalt.

The asphalt is fed into the hopper (1) at a temperature of approximately 170 °C, which is the temperature at which it is loaded at the quarry or production plant. From that point onwards, the mobile unit's thermal stabilisation system operates to maintain the material's temperature within an optimal range, preventing it from falling below 130 °C and ensuring its application complies with current regulations.

To ensure the thermal maintenance of the asphalt, the invention incorporates a heating system (2) comprising electric heating elements strategically distributed inside the hopper. These heating elements are configured to activate automatically when the temperature of the asphalt falls below a certain threshold, for example 135 °C, and deactivate when the temperature reaches 145 °C, thereby stabilising the material at around 140 °C. This prevents the degradation of the asphalt and ensures its application in accordance with regulatory requirements.

Temperature control is managed by an electronic controller in the hopper and via remote control (3), which automatically regulates the switching on and off of the heating elements. This controller allows different temperature values to be programmed, adapting to the characteristics of the asphalt being transported and the working conditions. The system's adjustability provides greater energy efficiency, preventing unnecessary overheating of the material.

For the distribution of the asphalt in the application area, the invention features a material extraction system (4), which may consist of a conveyor belt or a screw conveyor. This system allows the asphalt to be discharged in a metered and controlled manner, ensuring that the material flows from the hopper to the repair area without significant heat loss occurring during the process.

The mobile unit is mounted on a mobile chassis (5), which facilitates its movement to the various work sites. This chassis can take on different configurations depending on operational requirements and may be mounted on a trailer or a lorry. Thanks to this mobile structure, the invention allows hot asphalt to be transported to different locations without compromising its temperature, ensuring its correct application even during prolonged journeys.

The operation of the invention begins with the loading of hot asphalt into the storage hopper, where thermal insulation helps to retain the material's heat. As time passes and the temperature of the asphalt tends to drop, the electronic controller activates the heating system to restore the temperature to within the optimum range. When the asphalt needs to be applied for a repair, the extraction system allows it to be discharged from the hopper in a controlled manner, ensuring its proper distribution across the work area.

Thanks to this design, the invention keeps the asphalt at an optimal temperature throughout the working day, even during prolonged use or when moving between different application points. This ensures improved operational efficiency, preventing material wastage and avoiding disposal in landfills that lack recycling methods for bitumen, where it is ultimately not recycled and left in wasteland, roadside verges or at recycling plants that do not recycle it and instead contaminate the soil or subsoil. Finally, it ensures a higher quality of road repairs.

## Claims

1. A mobile unit with a thermal stabilisation and temperature control system for the transport and application of asphalt, **characterised in that** it comprises a thermally insulated storage hopper (1) mounted on a mobile chassis (5), designed to contain hot asphalt and prevent it from losing heat, said hopper (1) being equipped with a heating system (2) comprising electrical heating elements distributed throughout its interior.

2. The mobile unit according to claim 1, **characterised in that** the heating system (2) is controlled by an electronic controller (3), configured to activate the electric heating elements when the temperature of the asphalt falls below a predetermined threshold and to deactivate them when a higher value is reached, thereby maintaining the temperature of the asphalt within a stable and controlled range.

3. The mobile unit according to any of the preceding claims, **characterised in that** the electronic controller (3) is configured to programme the asphalt temperature values inside the hopper (1) by activating and deactivating the electrical heating elements of the heating system (2) inside the hopper (1).

4. The mobile unit according to any of the preceding claims, **characterised in that** it comprises a material extraction system (4) which facilitates the discharge of the asphalt from the storage hopper (1), said system being configured to allow the metered discharge of the material via a conveyor belt or a screw conveyor.

5. The mobile unit according to any of the preceding claims, **characterised in that** the electronic controller (3) is configured to maintain the asphalt at a constant temperature of around 140 °C by activating and deactivating the electrical heating elements of the heating system (2) inside the hopper (1).

6. The mobile unit according to any of the preceding claims, **characterised in that** the mobile chassis (5) on which the storage hopper (1) is mounted may take the form of a trailer or be integrated into a lorry.

7. A mobile unit according to any of the preceding claims, **characterised in that** the heating system (2) is configured to operate with energy-efficient electric heating elements.

8. Mobile unit according to any of the preceding claims, **characterised in that** the material extraction system (4) is configured for the direct, metered and controlled discharge of asphalt from the storage hopper (1) to the application area.

9. A mobile unit according to any of the preceding claims, **characterised in that** the electronic controller (3) allows manual, automatic or remote regulation of the temperature depending on environmental conditions and the storage time of the asphalt.

10. Mobile unit according to any of the preceding claims, **characterised in that** the hopper (1) comprises a tube containing a liquid configured to stabilise the temperature throughout the asphalt in a homogeneous manner.
